# EUROPEAN PATENT APPLICATION

(11) **EP 3 979 668 A1**
(43) Date of publication of application: **06.04.2022**
(21) Application number: 21209740.6
(22) Date of filing: 07.08.2017
(51) Int. Cl.: H04W 4/00, G06Q 20/32, H04B 5/00

(54) **WEARABLE NFC DEVICE FOR SECURE DATA INTERACTION**

(30) Priority: 05.08.2016 US 201615229337
(62) Divisional of application: 17761623.2
(71) Applicant: Avery Dennison Retail Information Services, LLC, Mentor, OH 44060 (US)
(72) Inventor: FORSTER, Ian J., Chelmsford, Essex CM1 6LA (GB)
(74) Representative: Müller-Boré & Partner Patentanwälte PartG mbB

(57) **Abstract**

A method and apparatus for near field communications. Exemplary embodiments can include a near field communication, NFC, device. The NFC device may comprise a piece of jewelry housing an NFC device, the jewelry configured to be worn on at least one of a hand, wrist, and fingers of a wearer of the NFC device, the NFC device having a secure state and an active state; and one or more sensors disposed in the piece of jewelry, the one or more sensors configured to sense a state of at least one of the wrist, hand, and fingers of the wearer with respect to at least one of the wrist, hand, and fingers of the wearer, wherein the state of the at least one of the wrist, hand, and fingers of the wearer changes the state of the NFC device between a secure state and an active state; wherein in the active state of the NFC device, the NFC device is set to a transmission mode or mode that activates any desired features of the NFC device, and wherein in the secure state of the NFC device, no or only limited data is sent and/or received or the unit is disabled.

## Description

### CROSS REFERENCE TO RELATED APPLICATION(S)

The present application claims priority to and the benefit of U.S. Utility Patent Application Number 15/229,337 filed on August 5, 2016, the entirety of which is incorporated herein by reference.

### BACKGROUND

Radio frequency identification (RFID) devices, including near field communication (NFC) enabled RFID devices, are utilized for a variety of purposes. Often such devices are formed as tags or labels and can be utilized to associate an object with an identification code or other data, such as website data. Such RFID devices may be passive and, upon receiving a signal, such as an excitation signal from an RFID or NFC-enabled reader, may be energized. The devices can then respond with a desired communication or provide information associated with a product, item or service associated with the RFID device.

Specifically, NFC is a data exchange protocol designed to allow devices, including suitably equipped mobile phones and wearable tokens, to interact with infrastructures, such as other mobile or personal computing devices, point of sale terminals, ticket gates on transportation systems, or RFID devices in the forms of "smart posters" or "touchpoints", for example. In such situations, bringing an NFC enabled device into proximity of such infrastructure or RFID devices can cause the transmission of data to the NFC enabled device, resulting in, for example, the opening of a web page, the acceptance of a media stream via Bluetooth or any of a number of other functions.

There are, however, concerns and problems with the use of such NFC devices and, in particular, wearable NFC devices used for access control and payments. One known problem is unauthorized or undesired access of payment or identity information through the use of scanners located or carried proximately to an NFC device. Such unauthorized or undesired scans are performed by criminals, retailers, and other parties seeking to obtain information from a variety of sources. Such unauthorized or undesired scans are possible because of the near-constant "on" or open state of typical NFC devices. Having a user actively activate or deactivate an NFC device, however, is cumbersome, slow, and inefficient, as well as impractical for providing desired security.

### SUMMARY

A method and apparatus for near field communications. Exemplary embodiments can include a near field communication (NFC) device. The NFC device may have a wristband housing an NFC device, the wristband fitting around a wrist of a wearer, the NFC device having a secure state and an active state; and one or more sensors disposed in the wristband, the one or more sensors sensing a state of at least one of the wrist of the wearer and a hand of the wearer, wherein the state of the at least one of the wrist of the wearer and the hand of the wearer changes the state of the NFC device between a secure state and an active state.

In another exemplary embodiment, a method of transitioning an NFC device between states may be described. The method of transitioning an NFC device between states may include disposing an NFC device on a wrist of a wearer; sensing a position of the wrist of the wearer and a hand of the wearer located next to the wrist of the wearer; providing the NFC device in a first state when the wrist of the wearer is in a relaxed position; and providing the NFC device in a second state when the hand of the wearer is in an articulated position with respect to the wrist of the wearer.

In still another exemplary embodiment, a NFC device may be described. The NFC device may have a piece of jewelry housing an NFC device, the jewelry designed to be worn on at least one of a hand, wrist, and fingers of a wearer of the NFC device, the NFC device having a secure state and an active state; and one or more sensors disposed in the piece of jewelry, the one or more sensors sensing a state of at least one of the wrist, hand, and fingers of the wearer with respect to at least one of the wrist, hand, and fingers of the wearer, wherein the state of the at least one of the wrist, hand, and fingers of the wearer changes the state of the NFC device between a secure state and an active state.

### BRIEF DESCRIPTION OF THE DRAWINGS

Advantages of embodiments of the present invention will be apparent from the following detailed description of the exemplary embodiments. The following detailed description should be considered in conjunction with the accompanying figures in which:
Fig. 1A is an exemplary diagram of an NFC device on a wrist of a wearer in a relaxed position.
Fig. 1B is an exemplary diagram of an NFC device on a wrist of a wearer in an articulated position.
Fig. 2A is an exemplary diagram of an NFC device on a finger of a wearer where the fingers are substantially close together.
Fig. 2B is an exemplary diagram of an NFC device on a finger of a wearer where the fingers are substantially spread apart.
Fig. 3A is an exemplary diagram of an NFC device with an optical symbology element on a wrist of a wearer in a relaxed position and with the optical symbology element in an obscured state.
Fig. 3B is an exemplary diagram of an NFC device with an optical symbology element on a wrist of a wearer in an articulated position and with the optical symbology element in a viewable state.

### DETAILED DESCRIPTION

Aspects of the invention are disclosed in the following description and related drawings directed to specific embodiments of the invention. Alternate embodiments may be devised without departing from the spirit or the scope of the invention. Additionally, well-known elements of exemplary embodiments of the invention will not be described in detail or will be omitted so as not to obscure the relevant details of the invention. Further, to facilitate an understanding of the description discussion of several terms used herein follows.

As used herein, the word "exemplary" means "serving as an example, instance or illustration." The embodiments described herein are not limiting, but rather are exemplary only. It should be understood that the described embodiments are not necessarily to be construed as preferred or advantageous over other embodiments. Moreover, the terms "embodiments of the invention", "embodiments" or "invention" do not require that all embodiments of the invention include the discussed feature, advantage or mode of operation.

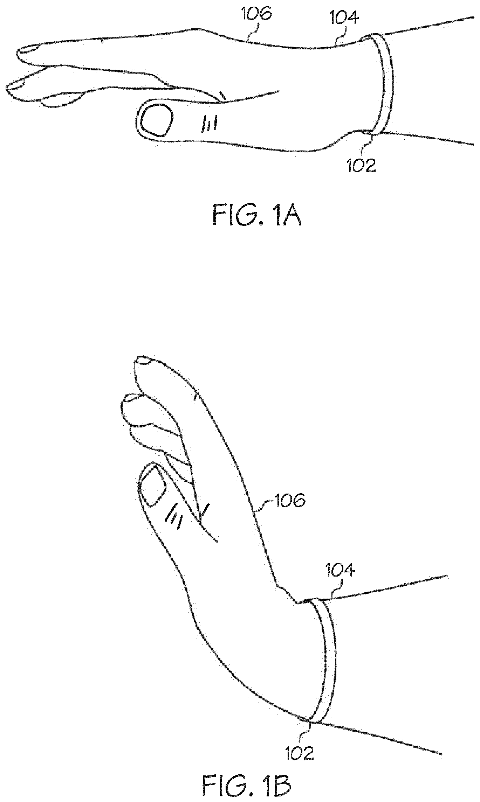

Generally referring to Figs. 1A-3B, various NFC devices and exemplary modes of operation may be shown and described. The NFC devices may be worn on the arm, wrist, hand, or finger of a wearer. The NFC devices may generally be in a secure state during regular wearing or use. However, the NFC devices may be activated or put into an open state upon a certain predetermined movement or articulation by the wearer. Such NFC devices and their activation capabilities may provide for additional desired security of the NFC devices and may be utilized to prevent unauthorized or undesired access to the data housed or shared on the NFC devices.

Referring now to exemplary Figs. 1A and 1B, an NFC device 102 may be worn, mounted on, or coupled to a wrist 104 of a wearer. The NFC device 102 may be any type of NFC device, for example a wristband, watch, or any other type of NFC device. Further, NFC device 102 may be worn in any desired fashion and may be coupled to the arm, wrist, or hand of the wearer in any known manner, for example by a coupling, clasp, or any other desired fashion. The NFC device may function in a known fashion to provide near field communications. It may be appreciated, in other exemplary embodiments, that the NFC device 102 may be any type of communication device, for example a radio frequency identification device (RFID) and the like.

In exemplary Fig. 1A, the wrist 104 and hand 106 of a user may be seen in a relaxed, or unarticulated position. In this position, the NFC device 102 may be in a first state, which is a secured or substantially secure state where only limited data is shared or the unit is disabled. For example, when the wearer of the NFC device 102 has their arm or wrist in this position, the NFC device 102 may not send or receive any data. In this state the NFC device 102 may be disconnected from its antenna or otherwise inhibited from operation; the NFC device 102 may be active, but may not provide any data pertaining to a transaction, for example only providing simple identity information; or the NFC device 102 may provide a random number, so that a unique individual can be tracked for a period of time, such as a few hours or when otherwise logged into a system, without the identity of the individual being known. Such a position of the arm or wrist 106 of the user may allow for the free wearing of NFC device 102 without any threat of unauthorized or undesired reading by an outside scanner, whether the outside scanner is a retailer, a point of sale scanner, a criminal illicitly attempting to obtain data, or any other scanner, outside source, or outside party.

In exemplary Fig. 1B, the NFC device 102 is again shown on wrist 104 of a wearer. However, in exemplary Fig. 1B, hand 106 is angled or articulated in an upward position. The articulation of hand 106 may allow for NFC device 102 to be in a second state, which may be an open state, activated state, or otherwise a state where NFC device 102 is set to a transmission mode or mode that activates any desired features of the NFC device 102. For example, in this mode, data may be transmitted from NFC device 102, payments may be made using NFC device 102, identification verification can be made through NFC device 102, or any other features of NFC device 102 may be activated or enabled, or, in other words, NFC device 102 can have its full functionality. In some exemplary embodiments, when a wearer positions their hand 106 and wrist 104 in the position shown in exemplary Fig. 1B, the wearer of NFC device 102 may make payments at a point of sale terminal or identify the wearer with appropriate information. Additionally, it should be understood that a wearer of NFC device 102 may transition the NFC device 102 between secure and active states at any desired time by performing the appropriate or desired movement of wrist 104 and/or hand 106. Additionally, in still further exemplary embodiments, it can be appreciated that such movements may be utilized to enable or allow for any other desired feature of NFC device 102. For example, a wearer of NFC device 102 may allow for the activation or deactivation of Bluetooth capabilities or Wi-Fi capabilities.

Still referring to exemplary Figs. 1A and 1B, NFC device 102 may be switched between a first state (secure) and a second state (active) through movement of the hand 106, wrist 104, and/or arm of a wearer. Various components may be utilized in NFC device 102 in order to allow it to switch states. In some exemplary embodiments, an optical sensor may be utilized on NFC device 102. The optical sensor may be mounted on a top or front portion of NFC device 102 and may point towards the hand 106 of the wearer. Thus, in Fig. 1A the optical sensor of NFC device 102 may not detect the hand 106, leaving NFC device 102 in a secure state. However, as shown in exemplary Fig. 1B, the optical sensor of NFC device 102 may detect hand 106 as it would be positioned in the plane of detection of the optical sensor. In another exemplary embodiment, a capacitive sensor on NFC device 102 could detect a change in capacitance between the NFC device 102 on wrist 104 and hand 106 when a wearer of NFC device 102 bends their wrist 104 or exerts strain or muscle movement, or any other detectable physical parameter, at the location where NFC device 102 IS worn. In such exemplary embodiments, it is appreciated that different movements of wrist 104 and/or hand 106, different muscle movements under NFC device 102, or any other different physical exertion may be utilized as an event to switch NFC device 102 from a secure state to an active state. As discussed in more detail below, such detection possibilities may be predetermined and stored in NFC device 102 or may be set according to any desire of a user or wearer of NFC device 102.

As shown in exemplary Fig. 1 b, hand 106 is shown in an upward position. It may be appreciated that this position of hand 106 with respect to wrist 104 may be a position that is not a customary position for hand 106 and wrist 104 of a wearer of NFC device 102. For example, it would be unusual for a wearer of NFC device 102 to have his or her hand 106 and wrist 104 in the position shown in Fig. 1B when at rest. This may be desirable as it can allow the wearer of NFC device 102 to only activate NFC device 102 at desired times without the risk, or with only a limited risk of undesired or unnecessary activation. It may be appreciated, however, that NFC device 102 may be such that it can be activated based on any set or predetermined movement of wrist 104 and hand 106, or any combination of movements. Such movements for the activation of NFC device 102 may be preset or predetermined in NFC device 102 or may be set according to the preferences of the user or wearer and stored with NFC device 102.

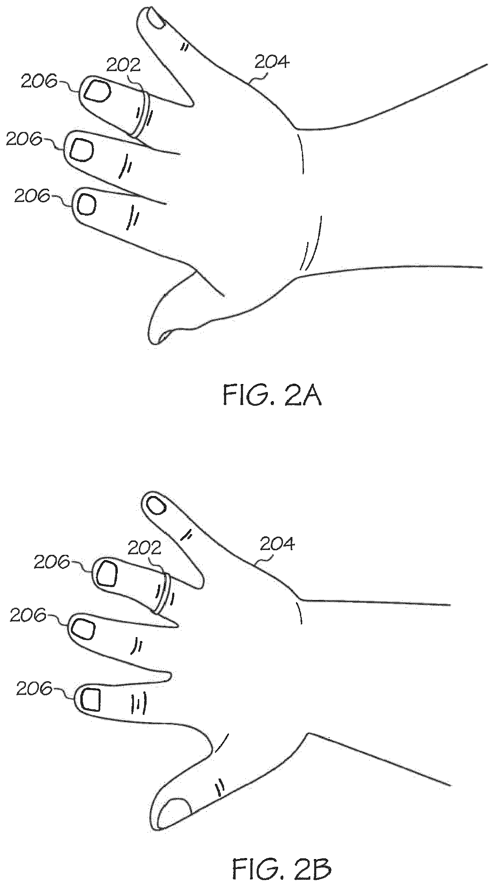

Exemplary Figs. 2A and 2B provide another exemplary embodiment of an NFC device 202. In this example, NFC device 202 may be another type of worn article, such as a ring or any other finger-worn structure or piece of jewelry. NFC device 202 may be worn on any finger or fingers 204 of hand 206. As in previous exemplary embodiments, NFC device 202 may have two states, a secure state and an active state, substantially similar to those described above with respect to exemplary Figs. 1A and 1B. However, in this exemplary embodiment, NFC device 202 may change states based on movements of a finger or fingers 204 on hand 206.

In exemplary Fig. 2A, the fingers 204 of hand 206 are in a relaxed and relatively close position. In this position, NFC device 202 may be in a secure state. In exemplary Fig. 2B, fingers 204 are in a deliberately spread apart position, which can allow for the transitioning of NFC device 202 from the secure state in Fig. 2A to an active state in Fig. 2B. As in the other previously-described exemplary embodiments, it may be appreciated that the changing of states of NFC device 202 may be accomplished through the spreading or closing of fingers 204, or may be accomplished through any other predetermined or user-determined movement of a finger or fingers 204, as desired.

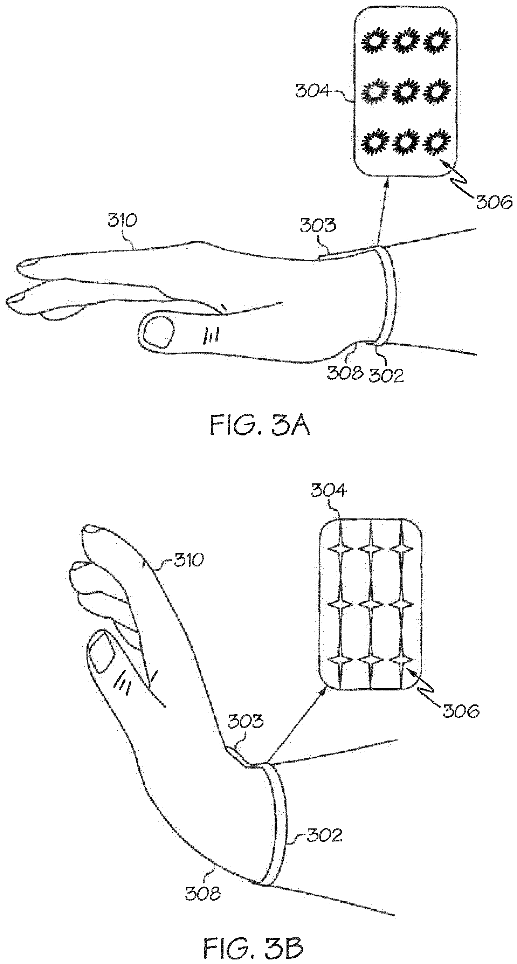

Referring now to exemplary Figs. 3A and 3B, another embodiment may have a wearable device 302 with an optical symbology 304 displayed on device 302. Device 302 may be any type of device, for example a wristband-type NFC device, similar to those described in above exemplary embodiments. Additionally, device 302 may have component 303 that is disposed over a wrist 308 of a wearer. Component 303 may be a label or sensor, as desired. Additionally, in some exemplary embodiments component 303 may be a sensor, in other exemplary embodiments, component 303 may include a display or may otherwise display any information described herein. Optical symbology 304 may be displayed in any fashion, for example on an active or static display, or any other known method on device 302. Optical symbology may be any type of symbology, for example a 1D or 2D code. Additionally, optical symbology 304 may convey any desired information, such as identity information.

In exemplary Fig. 3A, optical symbology 304 may have an array of information 306 that is concealed. Information 306 may be any type of information, as discussed above. When the wrist 308 and hand 310 of wearer of device 302 are in a relaxed position, stress on device 302 may be such that the information 306 is concealed, hidden, distorted, illegible, or otherwise indecipherable. This may be effectively similar to the secure states and positions described with respect to previous exemplary embodiments.

Referring now to exemplary Fig. 3B, information 306 may now be readable after the wrist 308 and hand 310 of the wearer of device 302 are moved so that hand 310 is in an upward position and flexing or displacing component 303, similar to the active state described with respect to some exemplary embodiments previously. Stress may be exerted on device 302 or component 303 through the movement of wrist 308, hand 310, a joint there between, or muscle position or activation below device 302. The optical symbology 304 information 306 may become readable or legible as a result of a variety of factors or conditions. For example, one method of making information 306 readable could include stretching a plastic film over optical symbology 304 and altering its effect on the polarization of light. This can change the shape of a lenticular- or prism-based optical covering. Thus, when the wrist 308 and/or hand 310 move, information 306 may go from concealed in Fig. 3A to legible in Fig. 3B. In still another exemplary embodiment, a piezoelectric film may be disposed over device 302, for example over optical symbology 304. The piezoelectric film may generate a charge that changes the state of a liquid crystal shutter on device 302, which could then render information 306 as legible or readable. Similar to previous exemplary embodiments, any desired movements or positions could be utilized to enact the concealing or revealing of information 306.

The foregoing description and accompanying figures illustrate the principles, preferred embodiments and modes of operation of the invention. However, the invention should not be construed as being limited to the particular embodiments discussed above. Additional variations of the embodiments discussed above will be appreciated by those skilled in the art.

Therefore, the above-described embodiments should be regarded as illustrative rather than restrictive. Accordingly, it should be appreciated that variations to those embodiments can be made by those skilled in the art without departing from the scope of the invention as defined by the following claims.

The present disclosure also encompasses the following items wherein further features, aspects and embodiments will be described.
1. A near field communication (NFC) device, comprising:
   a wristband housing an NFC device, the wristband fitting around a wrist of a wearer, the NFC device having a secure state and an active state; and
   one or more sensors disposed in the wristband, the one or more sensors sensing a state of at least one of the wrist of the wearer and a hand of the wearer, wherein the state of the at least one of the wrist of the wearer and the hand of the wearer changes the state of the NFC device between a secure state and an active state.
2. The near field communication (NFC) device of item 1, wherein the sensor is an optical sensor.
3. The near field communication (NFC) device of item 1, wherein the sensor is a capacitive sensor.
4. The near field communication (NFC) device of item 1, wherein the sensor detects physical parameters of the wearer of the NFC device.
5. The near field communication (NFC) device of item 1, wherein the secure state of the NFC device disconnects the NFC device from an antenna of the NFC device.
6. The near field communication (NFC) device of item 1, wherein the secure state of the NFC device allows for transmission of identity information.
7. The near field communication (NFC) device of item 1, wherein the secure state of the NFC device provides a randomly generated number associated with user information.
8. The near field communication (NFC) device of item 1, wherein the active state of the NFC device provides near field communication capabilities to the NFC device.
9. The near field communication (NFC) device of item 1, wherein the active state of the NFC device provides Wi-Fi communication capabilities to the NFC device.
10. The near field communication (NFC) device of item 1, wherein the active state of the NFC device provides Bluetooth capabilities to the NFC device.
11. The near field communication (NFC) device of item 1, wherein the detected state of the at least one of the wrist of the wearer and the hand of the wearer is an articulated state of the hand with respect to the wrist.
12. The near field communication (NFC) device of item 1, further comprising a display.
13. The near field communication (NFC) device of item 12, further comprising optical symbology displayed on the display.
14. The near field communication (NFC) device of item 11, wherein the secure state of the NFC display comprises concealing information on the display.
15. The nearfield communication (NFC) device of item 14, wherein the active state of the NFC display comprises unconcealing information on the display.
16. A method of transitioning an NFC device between states, comprising:
   disposing an NFC device on a wrist of a wearer;
   sensing a position of the wrist of the wearer and a hand of the wearer located next to the wrist of the wearer;
   providing the NFC device in a first state when the wrist of the wearer is in a relaxed position; and
   providing the NFC device in a second state when the hand of the wearer is in an articulated position with respect to the wrist of the wearer.
17. The method of transitioning an NFC device between states of item 16, wherein the first state is a secure state of the NFC device and the second state is an active state of the NFC device.
18. The method of transitioning an NFC device between states of item 16, wherein the first state conceals information on a display of the NFC device and the second state unconcealed information on the display of the NFC device.
19. The method of transitioning an NFC device between states of item 18, further comprising disposing a component of the display over a wrist joint of the wearer.
20. A near field communication (NFC) device, comprising:
   a piece of jewelry housing an NFC device, the jewelry designed to be worn on at least one of a hand, wrist, and fingers of a wearer of the NFC device, the NFC device having a secure state and an active state; and
   one or more sensors disposed in the piece of jewelry, the one or more sensors sensing a state of at least one of the wrist, hand, and fingers of the wearer with respect to at least one of the wrist, hand, and fingers of the wearer, wherein the state of the at least one of the wrist, hand, and fingers of the wearer changes the state of the NFC device between a secure state and an active state.

## Claims

1. A near field communication, NFC, device (102), comprising:
a piece of jewelry housing an NFC device (102), the jewelry configured to be worn on at least one of a hand, wrist, and fingers of a wearer of the NFC device (102), the NFC device having a secure state and an active state; and
one or more sensors disposed in the piece of jewelry, the one or more sensors configured to sense a state of at least one of the wrist, hand, and fingers of the wearer with respect to at least one of the wrist, hand, and fingers of the wearer, wherein the state of the at least one of the wrist, hand, and fingers of the wearer changes the state of the NFC device (102) between a secure state and an active state;
wherein in the active state of the NFC device (102), the NFC device (102) is set to a transmission mode or mode that activates any desired features of the NFC device (102), and
wherein in the secure state of the NFC device (102), no or only limited data is sent and/or received or the unit is disabled.

2. The near field communication, NFC, device (102) of claim 1, wherein the sensor is an optical sensor.

3. The near field communication, NFC, device (102) of claim 1, wherein the sensor is a capacitive sensor.

4. The near field communication, NFC, device (102) of claim 1, wherein the sensor is configured to detect physical parameters of the wearer of the NFC device (102).

5. The near field communication, NFC, device (102) of claim 1, wherein the secure state of the NFC device is configured to disconnect the NFC device from an antenna of the NFC device (102).

6. The near field communication, NFC, device (102) of claim 1, wherein the secure state of the NFC device (102) is configured to allow for transmission of identity information.

7. The near field communication, NFC, device (102) of claim 1, wherein the secure state of the NFC device (102) is configured to provide a randomly generated number associated with user information.

8. The near field communication, NFC, device (102) of claim 1, wherein the active state of the NFC device (102) is configured to provide near field communication capabilities to the NFC device (102).

9. The near field communication, NFC, device (102) of claim 1, wherein the detected state of the at least one of the wrist of the wearer and the hand of the wearer is an articulated state of the hand with respect to the wrist.

10. The near field communication, NFC, device (102) of claim 1, further comprising a display.

11. The near field communication, NFC, device (102) of claim 9, wherein the secure state of the NFC display is configured to conceal information on the display.

12. The near field communication, NFC, device (102) of claim 11, wherein the active state of the NFC display is configured to unconceal information on the display.

13. A method of transitioning an NFC device (102) between states, comprising:
disposing an NFC device (102) on a hand, wrist or finger of a wearer;
sensing a position of the hand, wrist or finger of the wearer and a hand, wrist or finger of the wearer located next to the hand, wrist or finger of the wearer;
providing the NFC device (102) in a first state when the hand, wrist or finger of the wearer is in a relaxed position; and
providing the NFC device (102) in a second state when the hand, wrist or finger of the wearer is in an articulated and/or moved and/or spread position with respect to a hand, wrist or finger of the wearer;
wherein the first state is a secure state of the NFC device where no or limited data is sent and/or received or the unit is disabled and the second state is an active state of the NFC device (102) where the NFC device (102) is set to a transmission mode or more that activates any desired features of the NFC device (102).

14. The method of transitioning an NFC device (102) between states of claim 13, wherein the first state conceals information on a display of the NFC device (102) and the second state unconcealed information on the display of the NFC device (102).

15. The method of transitioning an NFC device (102) between states of claim 14, further comprising disposing a component of the display over a wrist joint of the wearer.
